# EUROPÄISCHE PATENTSCHRIFT

(11) **EP 2 176 149 B1**
(45) Veröffentlichungstag und Bekanntmachung des Hinweises auf die Patenterteilung: **25.04.2018**
(21) Anmeldenummer: 08784767.9
(22) Anmeldetag: 15.07.2008
(51) Int. Cl.: B65G 57/03, B65G 57/20, B65G 59/02, B65G 61/00

(54) **VERFAHREN ZUM ABSTAPELN ODER STAPELN VON GEBINDEN**
METHOD FOR UNSTACKING OR STACKING PACKAGES
PROCÉDÉ DE DÉSEMPILEMENT OU D'EMPILEMENT DE FÛTS

(30) Priorität: 06.08.2007 DE 102007036900
(43) Veröffentlichungstag der Anmeldung: 21.04.2010
(73) Patentinhaber: KHS GmbH, 44143 Dortmund (DE)
(72) Erfinder: JUNGHANS, Joachim, 60326 Frankfurt (DE)
(86) Internationale Anmeldenummer: PCT/EP2008/005758
(87) Internationale Veröffentlichungsnummer: WO 2009/018895

(56) Entgegenhaltungen:
- EP-A- 0 366 943
- EP-A- 0 482 406
- DE-A1- 2 901 105
- DE-A1- 4 124 703
- DE-A1- 19 946 550
- DE-U1- 8 425 924
- DE-U1- 29 913 060
- NL-A- 8 900 654

## Beschreibung

Die Erfindung bezieht sich auf ein Verfahren gemäß dem Oberbegriff des Patentanspruchs 1 oder 2.

"Gebinde" im Sinne der Erfindung sind solche Anordnungen, die jeweils aus einem Träger oder Tray beispielsweise aus Karton oder Pappe (auch Wellpappe) und aus mehreren auf dem Träger angeordneten Behältern bestehen. Die Gebinde sind beispielsweise auch Leergebinde mit leeren Behältern oder Flaschen, die als Leergut z.B. an einen Getränkehersteller zurückgeliefert werden. Die Gebinde können aber auch gefüllte Behälter, z.B. Flaschen aufweisen.

Als Depalettierer oder Entpalettierer ausgebildete Vorrichtungen zum Abstapeln von auf Transportträgern angeordneten Flaschenkästen sind in unterschiedlichen Ausführungen bekannt. Die grundsätzliche Arbeitsweise solcher Vorrichtungen besteht darin, dass mit einer für eine gesteuerte Bewegung in vertikaler und horizontaler Richtung ausgebildeten Transfereinrichtung beispielsweise jeweils eine oberste Lage des an einer ersten Position (Bereitstellungsposition) auf einem Transportträger, beispielsweise auf einer Transportpalette bereitstehenden Kastenstapels durch seitliches Festklemmen an Klemm- oder Greifarmen erfasst, vom Kastenstapel abgehoben und auf einen an einer zweiten, gegenüber der ersten räumlich versetzten Position bzw. auf einen dortigen Transporttisch oder Transporteur abgesetzt wird, mit dem die Kästen einer weiteren Verwendung zugeführt werden.

Die NL 8900654 A offenbar eine Stapelvorrichtung, bei welcher zweiseitig am Transportweg von Gebinden L-förmige Auflagewinkel einer Hubvorrichtung vorgesehen sind, die in Richtung des Gebindes bzw. seiner Tragkante einschwenkbar und vertikal verfahrbar sind. Eine vergleichbare Vorrichtung zeigt die DE 84 25 924 U1, welche zusätzlich noch ein in x-y-Richtung verfahrbares Transportsystem aufweist.

Aus der EP 0 482 406 A1 ist ein Palettierer bekannt, welcher ebenfalls L-förmige Auflagewinkel aufweist, in Form eines vertikalen Tragarms und einer tragenden Auflagekante. Dabei ist die tragende Auflagekante um 90° verschwenkbar, so dass diese in der verschwenkten Position die flache Verlängerung des Tragarms bildet und derart auch in enge Stapelzwischenräume einführbar ist.

Die EP 0 366 943 A1 offenbart einen Palettierer für das lagenweise Ineinanderstapeln von Steigen. Dabei sind Klappflächen zum Untergreifen und Freigeben der Steigen vorgesehen, und wobei die ergriffenen Steigen zwischen einer Aufnahmestelle und einer Abgabestelle verfahrbar sind.

Diese Vorrichtungen eignen sich bei allenfalls nur geringfügigen konstruktiven Änderungen auch für das Stapeln von Kästen auf Transportträgem, beispielsweise auf Transportpaletten. Nicht geeignet sind die be kannten Vorrichtungen allerdings zum Abstapeln oder Stapeln von Gebinden der vorstehend definierten Art.

Aufgabe der Erfindung ist es, ein Verfahren aufzuzeigen, mit dem insbesondere ein Abstapeln, aber grundsätzlich auch ein Stapeln von Gebinden möglich ist. Zur Lösung dieser Aufgabe ist ein Verfahren entsprechend dem Patentanspruch 1 oder 2 ausgebildet.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an einem Ausführungsbeispiel näher erläutert. Es zeigen:
- Fig. 1: in schematischer Darstellung und als Block- oder Funktionsdiagramm eine Anlage zum Abstapeln oder Entladen von auf Transportträgern in Form von Transportwägelchen oder Dollys gestapelten Gebinden;
- Fig. 2: sehr schematisch die Abstapelvorrichtung bzw. den Entpalettierer der Anlage der Figur 1;
- Fig. 3: in vereinfachter Darstellung einen Schnitt durch einen Transporttisch des Entpalettierers.

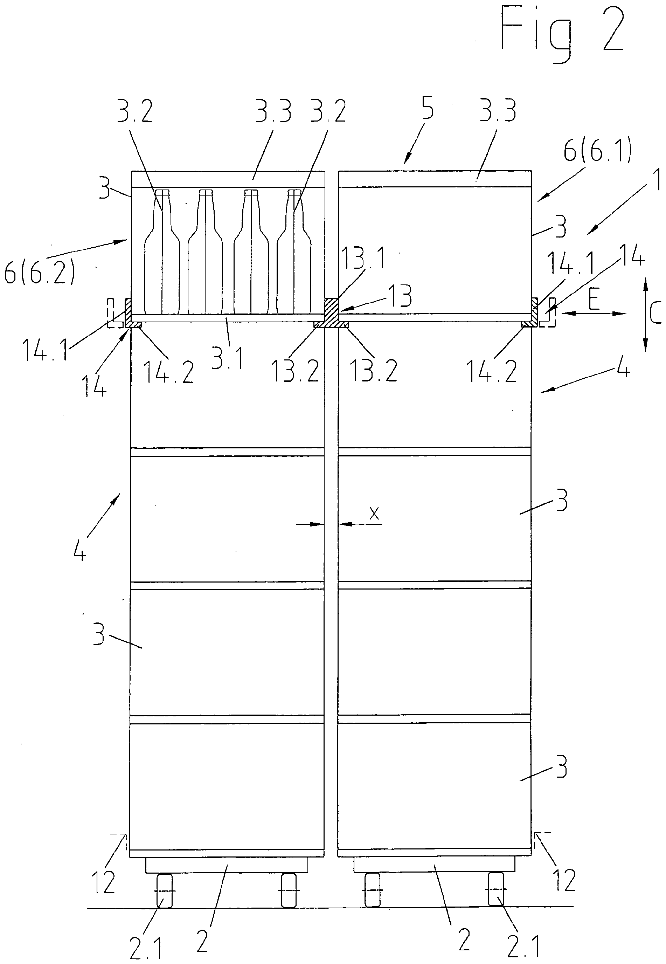

Der in den Figuren allgemein mit 1 bezeichneten Anlage werden auf Transportträgern 2 von Gebinden 3 gebildete Gebindestapel 4 zunächst einzeln in Richtung des Pfeils A zugeführt. Die Gebinde 3 bilden auf jedem als Rollwägelchen bzw. Dolly mit vier Laufrollen 2.1 ausgestatteten Transportträger 2 einen Gebindestapel 4 mit beispielsweise insgesamt fünf übereinander gestapelten Gebinden 3, die jeweils aus einem z.B. aus Karton oder Pappe (auch Wellpappe) gefertigten Gebindeträger oder Tray 3.1 und aus mehreren auf diesem Tray aufstehenden Behältern oder Flaschen 3.2 bestehen. Der einfacheren Darstellung wegen sind in der Figur 2 nur für eines der Gebinde 3 das Tray 3.1 und die Flachen 3.2 gezeigt, während die restlichen Gebinde 3 nur vereinfacht wiedergegeben sind. Zur Erzielung der notwendigen Stabilität reichen in jedem Gebindestapel 4 die Flaschen 3.2 jedes Gebindes 3 (mit Ausnahme des obersten Gebindes 3) mit ihrer Flaschenmündung in eine Öffnung des Trays 3.1 des darüber liegenden Gebindes hinein. Auf die Flaschen 3.2 des obersten Gebindes ist eine dieses Gebinde stabilisierende Abdeckung 3.3 aufgelegt. Die Gebinde 3 sind beispielsweise Leergebinde mit leeren Flaschen 3.2, die als Leergut an einen Getränkehersteller zurückgeführt werden.

In der Anlage 1 werden jeweils mehrere auf einem Transportträger 2 gebildete Gebindestapel 4, d.h. bei der dargestellten Ausführungsform insgesamt vier Gebindestapel 4 mit den Transportträgern 2 zu einer Gebindestapelanordnung 5 zusammengeführt, die dann in fünf horizontalen Lagen 6 in zwei sich in Transport- und Arbeitsrichtung A erstreckenden Reihen 6.1 und 6.2 jeweils zwei Gebinde 3 aufweist.

In einer Abstapelvorrichtung bzw. in einem Entpalettierer 7 der Anlage 1 erfolgt ein lagenweises Abstapeln der Gebindestapelanordnung 5, und zwar unter Verwendung einer Transfereinrichtung, die Bestandteil des Entpalettierer 7 ist und mit der an der Bereitstellungsposition 7.1 die Gebinde 3 beispielsweise der jeweils obersten Lage 6 von der Gebindestapelanordnung 5 abgenommen und auf einen Ablage- oder Transporttisch 7.2 zur Weiterleitung an Transporteure 8 bzw. 9 abgesetzt werden, und zwar die beiden Gebinde 3 der Reihe 6.1 zur Weiterleitung an den Transporteur 8 und die beiden Gebinde 3 der Reihe 6.2 zur Weiterleitung an den Transporteur 9 derart, dass die Gebinde 3 auf den beiden Transporteuren 8 und 9 voneinander beabstandet sind. An einer Zusammenführung 10 werden sämtliche Gebinde 3 auf einen gemeinsamen Transporteur 11 geleitet, über den die Gebinde 3 als einspuriger Gebindestrom einer weiteren Verwendung, beispielsweise einem die Flaschen 3.2 aus den Trays 3.1 entnehmenden Auspacker zugeführt werden.

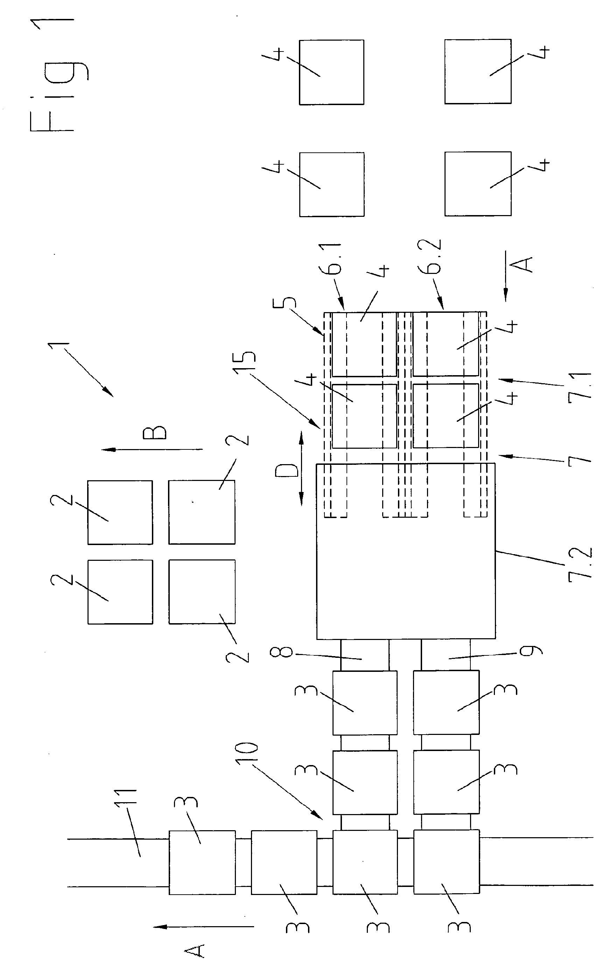

Nach der Entnahme der letzten bzw. untersten Lage 6 von den Transportträgern 2 werden die leeren Transportträger aus der Anlage 1 ausgeschleust, wie dies in der Figur 1 mit dem dortigen Pfeil B angedeutet ist.

Die Figur 2 zeigt in schematischer Darstellung und in Seitenansicht die Gebindestapelanordnung 5 bestehend aus den auf jeweils einem Transportträger 2 angeordneten Gebindestapeln 4. Durch entsprechende Führungen, die in der Figur 2 nur sehr schematisch mit 12 angegeben sind, sind die einzelnen Transportträger 2 an der Bereitstellungsposition 7.1 während des Abstapelns lagegenau positioniert, und zwar derart, dass zwischen den beiden in Transport- oder Verarbeitungsrichtung A und damit senkrecht zur Zeichenebene der Figur 2 erstreckenden Reihen 6.1 und 6.2 jeder Lage 6 ein Abstand x gebildet ist. Hierdurch ist es möglich, zwischen die Reihen 6.1 und 6.2 der von der Gebindestapelanordnung 5 abzunehmenden Lage 6 einen Tragarm 13 der Transfereinrichtung horizontal derart einzuführen, dass der mit seiner Längserstreckung in horizontaler Richtung und auch parallel zur Transport- und Verarbeitungsrichtung A orientierte Tragarm 13 mit einem Tragarmabschnitt 13.1 zwischen den Trays 3.1 der beiden Gebindereihen 6.1 und 6.2 angeordnet ist und mit jeweils einem an der Unterseite des Abschnittes 13.1 seitlich wegstehenden Tragarmabschnitt 13.2 eine Auflage für die Unterseite der Trays 3.1 bildet, und zwar an einem außen liegenden Bereich, der von Flaschen 3.2 nicht eingenommen ist.

Zusätzlich zu dem inneren Tragrahmen 13 sind zwei äußere Tragarme 14 vorgesehen, die ebenfalls mit ihrer Längserstreckung in horizontaler Richtung und parallel zur Transport- und Verarbeitungsrichtung A und damit bei der Darstellung der Figur 2 senkrecht zur Zeichenebene dieser Figur orientiert sind. Diese beiden äußeren Tragarme 14 sind für das Entnehmen der jeweiligen Lage 6 so an den Außenseiten der beiden Reihen 6.1 und 6.2 angeordnet, dass sie mit jeweils einem Tragarmabschnitt 14.1 einer Außenseite der Trays 3.1 benachbart liegen und mit einem an der Unterseite des Abschnittes 14.1 von diesem seitlich wegstehenden Tragarmabschnitt 14.2 eine Auflage für die Unterseite der Trays 3.1 bilden. Die beiden Tragarme 13 und 14 sind Bestandteil eines beispielsweise gabelartigen Trag- oder Transferrahmens 15 des Entpalettierers 7 und sind gemeinsam mit diesem Trag- oder Transferrahmen 15 gesteuert in vertikaler und horizontaler Richtung bewegbar, wie dies in der Figur 2 mit dem Doppelpfeil C für den Vertikalhub und in der Figur 1 mit dem Doppelpfeil D für den Horizontalhub angedeutet ist. Die beiden äußeren Tragarme 14 sind weiterhin auch in horizontaler Richtung und senkrecht zu ihrer Längserstreckung gesteuert bewegbar (Doppelpfeil E), um so durch Aufeinanderzubewegen der beiden äußeren Tragarme 14 die Gebinde 3 der abzunehmenden Lage 6 auf den Tragarmen 13 und 14 zu zentrieren und endgültig zu sichern bzw. nach dem Aufsetzen der jeweiligen Lage 6 auf den Transporttisch 7.2 durch Auseinander-Bewegen der beiden äußeren Tragarme 14 die Gebinde 3 von der Transfereinrichtung bzw. dem Trag- oder Transferrahmen 15 freizugeben.

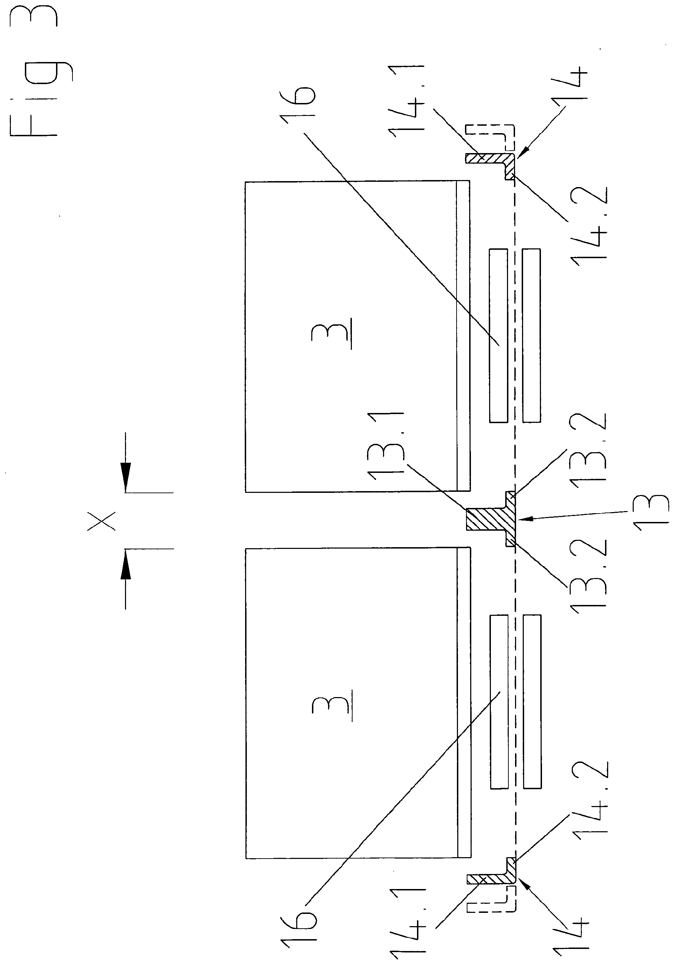

Im Detail erfolgt also das Abstapeln der Gebindestapelanordnung 5 derart, dass der Tragarm 13 zwischen den beiden Reihen 6.1 und 6.2 und die Tragarme 14 an der Außenseite dieser Reihen positioniert werden, sodass sich die Abschnitte 13.2 und 14.2 an der Unterseite der Trays 3.1 befinden, dass dann die beiden äußeren Tragarme 14 in Richtung auf den inneren Tragarm 13 bewegt bzw. zugestellt werden, dass dann der von den Tragarmen 13 und 14 gebildete Trag- oder Transferrahmen 15 vertikal angehoben und anschließend horizontal über den Transporttisch 7.2 bewegt wird, und dass schließlich die Gebinde 3 durch Absenken des Trag- oder Transferrahmens 15 auf den Transporttisch 7.2 bzw. auf diesen Transporttisch bildende Transportbänder 16 abgesetzt werden, die (Transportbänder) über die Tragrahmabschnitte 13.2 und 14.2 der abgesenkten Tragarme 13 und 14 vorstehen und Auflagen für die Unterseite der Gebinde 3 bilden (Figur 3).

Die Erfindung wurde voranstehend an einem Ausführungsbeispiel beschrieben. Es versteht sich, dass zahlreiche Änderungen sowie Abwandlungen möglich sind, ohne dass dadurch der der Erfindung zugrunde liegende Erfindungsgedanke verlassen wird.

So wurde vorstehend davon ausgegangen, dass das Abstapeln der Gebindestapelanordnung 5 jeweils lagenweise erfolgt. Grundsätzlich besteht aber auch die Möglichkeit, mit dem Entpalettierer 7 in jedem Arbeitstakt mehrere Lagen 6 als Teilstapel von der Gebindestapelanordnung 5 oder aber sämtliche Lagen 6 der Gebindestapelanordnung 5 von den Transportträgern 2 abzunehmen und auf den Transporttisch 7.2 abzusetzen. Weiterhin können die Transportträger 2 auch Transportpaletten sein, auf denen dann jeweils wenigstens ein Stapel 4 aus mehreren Gebinde 3 gebildet ist.

Weiterhin kann es zweckmäßig sein, anstelle eines einzigen Tragarmes 13 zwei derartige parallel zu einander angeordnete Tragarme vorzusehen, die jeweils L-profilartig mit einem eine seitliche Anlage für die Trays 3.1 bildenden vertikalen Tragarmabschnitt und einem eine Auflage für die Trays 3.1 bildenden horizontalen Tragarmabschnitt 13.2 ausgebildet und in horizontaler Richtung senkrecht zu ihrer Längserstreckung beweglich sind, sodass beim Absetzen der jeweiligen Lage 6 oder aber mehrerer Lagen auf den Transporttisch 7.2 die beiden Reihen 6.1 und 6.2 noch weiter voneinander beabstandet werden können.

Schließlich kann die Anlage 1 auch als Palettierer bzw. zum Stapeln der Gebinde 3 verwendet werden, wobei dann der Entpalettierer 7 als Palettierer betrieben wird, dem bzw. dessen Transporttisch 7.2 die Gebinde 3 über die Transporteure 8 und 9 zugeführt werden, und zwar derart, dass die Gebinde 3 auf dem Transporttisch 7.2 jeweils Lagen 6 mit zwei Reihen 6.1 und 6.2 und mit jeweils zwei Gebinden 3 je Reihe bilden. Diese Lagen 6 werden dann mit dem von den Tragarmen 13 und 14 gebildeten Trag- oder Transferrahmen 15 erfasst und auf wenigstens einen an der Position 7.1 bereitstehenden Transportträger oder auf einen dort bereits gebildeten Gebindeteilstapel abgesetzt.

### Bezugszeichenliste

- 1: Anlage
- 2: Transportträger
- 2.1: Rolle
- 3: Gebinde
- 3.1: Tray
- 3.2: Flasche
- 4: Gebindestapel auf jeweils einem Transportträger 2
- 5: Gebindestapelanordnung
- 6: Lage
- 6.1, 6.2: Reihe
- 7: Depalettierer/Palettierer
- 7.1: Bereitstellungsposition
- 7.2: Transporttisch
- 8, 9: Transporteur
- 10: Zusammenführung
- 11: Transporteur
- 12: Führung
- 13: Tragarm
- 13.1, 13.2: Abschnitt des Tragarmes 13
- 14: Tragarm
- 14.1, 14.2: Abschnitt des Tragarmes 14
- 15: Trag- oder Transferrahmen des Entpalettierers/Palettierers 7
- 16: Transportband
- A: Transport- und Verarbeitungsrichtung
- B: Transportrichtung der leeren Transportträger 2
- C: vertikale Hubbewegung des Trag- oder Transferrahmens 15
- D: horizontale Hubbewegung des Trag- oder Transferrahmens 15
- E: Zustellbewegung der Tragarme 14
- x: Abstand

## Patentansprüche

1. Verfahren zum Abstapeln von jeweils auf einem Transportträger (2) als Gebindestapel (4) angeordneten Gebinden (3) unter Verwendung eines Entpalettierers (7) mit einem in horizontaler und/oder vertikaler Richtung gesteuert bewegbaren Trag- oder Transferrahmen (15),
wobei die Gebinde (3) an einer ersten Position (7.1) des Entpalettierers (7) eine Gebindestapelanordnung (5) bilden, die in mehreren in vertikaler Richtung übereinander angeordneten Lagen (6) jeweils wenigstens zwei Gebinde (3) aufweist und von der die Gebinde (3) lagenweise oder als Teil- oder Gesamtstapel mit Hilfe des Trag- oder Transferrahmens (15) entnommen und an einer weiteren Position (7.2) des Entpalettierers (7) für den Abtransport mit wenigstens einem Transporteur (8, 9) abgesetzt werden, wobei wenigstens zwei auf jeweils einem Transportträger (2) angeordnete Gebindestapel (4) zu der Gebindestapelanordnung (5) zusammengeführt werden und
wobei das Aufnehmen der Gebinde (3) an der ersten Position (7.1) mit wenigstens einem inneren und wenigstens zwei äußeren Tragarmen (13, 14) des Trag- oder Transferrahmens (15) erfolgt,
wobei die äußeren Tragarme (14) zumindest in Teilabschnitten einen winkel- oder L-förmigen Querschnitt aufweisen,
**dadurch gekennzeichnet, dass** der innere Tragarm (13) zwischen die wenigstens zwei Gebinde (3) der untersten, abzunehmenden Lage (6) derart eingeführt wird, dass er eine seitliche Abstützung sowie zugleich auch eine Auflage für die beidseitig angeordneten Gebinde (3) bildet, und
dass die äußeren Tragarme (14) an der untersten, abzunehmenden Lage (6) derart positioniert werden, dass sie jeweils eine seitliche Abstützung sowie zugleich auch eine Auflage für die Gebinde (3) an ihren dem wenigstens einen inneren Tragarm (13) abgewandten Außenseiten bilden.

2. Verfahren zum Stapeln von Gebinden (3) auf Transportträgern (2) unter Verwendung eines Palettierers (7) mit einem in horizontaler und/oder vertikaler Richtung gesteuert bewegbaren Trag- oder Transferrahmen (15), wobei die Gebinde (3) zur Bildung von Lagen (6) oder Teilstapel, die jeweils wenigstens zwei Gebinde (3) je Lage (6) aufweisen, zusammengeführt und dann lagenweise oder als Teilstapel mit Hilfe des Trag- oder Transferrahmen (15) aufgenommen und zur Bildung von Gebindestapeln (5) auf einem Transporttrager (2) oder dort bereits gebildete Teilstapel abgesetzt werden,
wobei das Aufnehmen der zu Lagen (6) oder Teilstapel zusammengeführten Gebinde (3) mit wenigstens einem inneren und wenigstens zwei äußeren Tragarmen (13, 14) des Trag- oder Transferrahmens (15) erfolgt, von denen der innere Tragarm (13) zwischen die wenigstens zwei Gebinde (3) der jeweiligen Lage (6) oder der untersten Lage (6) des Teilstapels derart eingeführt wird, dass er eine seitliche Abstützung sowie zugleich auch eine Auflage für die beidseitig angeordneten Gebinde (3) bildet, und von denen die äußeren Tragarme (14) an der Lage (6) oder der untersten Lage (6) des Teilstapels derart positioniert werden, dass sie jeweils eine seitliche Abstützung sowie zugleich auch eine Auflage für die Gebinde (3) an ihren dem wenigstens einen inneren Tragarm (13) abgewandten Außenseiten bilden,
**dadurch gekennzeichnet, dass** die äußeren Tragarme (14) zumindest in Teilabschnitten einen winkel- oder L-förmigen Querschnitt aufweisen.

3. Verfahren nach Anspruch 1 oder 2, **dadurch gekennzeichnet, dass** die Gebinde (3) an den Tragarmen (13, 14) durch Zustellen der äußeren Tragarme (14) in Richtung auf den inneren Tragarm (13) zwischen diesen Tragarmen (13, 14) zentriert und gehalten, vorzugsweise querkraftfrei oder im Wesentlichen querkraftfrei gehalten sind.

4. Verfahren nach einem der vorhergehenden Ansprüche, **dadurch gekennzeichnet,**
**dass** der wenigstens eine innere Tragarm (13) zumindest in Teilabschnitten einen Querschnitt aufweist, der einem umgekehrten T oder im Wesentlichen umgekehrten T entspricht.

5. Verfahren nach einem der vorhergehenden Ansprüche, **dadurch gekennzeichnet,**
**dass** die äußeren Tragarme (14) zumindest in Teilabschnitten einen winkel- oder L-förmigen Querschnitt aufweisen.

6. Verfahren nach einem der vorhergehenden Ansprüche, **dadurch gekennzeichnet,**
**dass** die Transportträger mit Rollen versehene Transportträger (2) sind.

7. Verfahren nach einem der vorhergehenden Ansprüche, **dadurch gekennzeichnet,**
**dass** am Entpalettierer/Palettierer (7) Mittel (12) zur lagegenauen Positionierung der Transportträger (2) und/oder der auf den Transportträgern (2) angeordneten Gebindestapel (4) vorgesehen sind.

8. Verfahren nach einem der vorhergehenden Ansprüche, **dadurch gekennzeichnet,**
**dass** beim Abstapeln jeweils eine Gebindestapelanordnung (5) bestehend aus wenigstens vier auf jeweils einem Transportträger (2) angeordneten Gebindestapeln (4) so zusammengestellt wird, dass jede Lage (6) der Gebindestapelanordnung (5) wenigstens zwei Reihen (6.1, 6.2) mit jeweils wenigstens zwei Gebinden (3) je Reihe aufweist.

9. Verfahren nach einem der vorhergehenden Ansprüche, **dadurch gekennzeichnet,**
**dass** beim Abstapeln die der Gebindestapelanordnung (5) entnommenen Gebinde (3) an der weiteren Position (7.2) auf einem dort gebildeten Transporttisch (7.2) lagenweise oder als Teil- oder Gesamtstapel abgesetzt und von dort an den wenigstens einen Transporteur (8, 9) übergeben werden.

10. Verfahren nach einem der vorhergehenden Ansprüche, **dadurch gekennzeichnet,**
**dass** beim Stapeln die Lagen (6) oder die Teilstapel so zusammengestellt werden,
**dass** jede Lage (6) wenigstens zwei Reihen (6.1, 6.2) mit jeweils wenigstens zwei Gebinden (3) je Reihe aufweist, und dass für das Stapeln der wenigstens eine innere Tragarm (13) die Gebinde (3) zwischen den Reihen (6.1, 6.2) und die äußeren Tragarme (14) die Gebinde (3) an den dem inneren Tragarm (13) abgewandten Außenseiten jeder Reihe (6.1, 6.2) abstützen.

11. Verfahren nach einem der vorhergehenden Ansprüche, **dadurch gekennzeichnet,**
**dass** die Gebinde (3) jeweils aus wenigstens einem Tray (3.1), beispielsweise aus Karton oder Pappe, sowie aus mehreren auf dem jeweiligen Tray (3.1) angeordneten Behältern, beispielsweise Flaschen (3.2) bestehen.

## Claims

1. Method for unstacking packages (3), arranged as a package stack (4) in each case on a transport carrier (2), making use of a pallet clearing device (7) with a carrier frame or transfer frame (15) which can be moved in a controlled manner in a horizontal and/or vertical direction,
wherein the packages (3), at a first position (7.1) of the pallet clearing device (7), form a package stack arrangement (5), which comprises in each case at least two packages (3) arranged in a plurality of layers (6) in a vertical direction above one another, and from which the packages (3) are removed layer by layer or as part stacks or total stacks with the aid of the carrier frame or transfer frame (15), and are disposed at a further position (7.2) of the pallet clearing device (7) for removal transport with at least one transporter (8, 9),
wherein at least two package stacks (4) arranged in each case on a transport carrier (2) are merged into the package stack arrangement (5),
and
wherein the taking of the packages (3) at the first position (7.1) is effected by at least one inner and at least two outer carrier arms (13, 14) of the carrier frame or transfer frame (15),
wherein the outer carrier arms (14), at least in part sections, exhibit an angular or L-shaped cross section,
**characterised in that** the inner carrier arm (13) is guided between the at least two packages (3) of the lowermost layer (6) to be removed in such a way that it forms a lateral support, as well as simultaneously also forming a standing surface for the packages (3) arranged on both sides, and
that the outer carrier arms (14) are positioned at the lowermost layer (6) to be removed in such a way that they form in each case a lateral support, as well as simultaneously also forming a standing surface for the packages (3) on their outer sides, facing away from the at least one inner carrier arm (13).

2. Method for the stacking of packages (3) on transport carriers (2) making use of a pallet loader (7), with a carrier frame or transfer frame (15) which can be moved in a controlled manner in a horizontal and/or vertical direction, wherein the packages (3) are merged to form layers (6) or part stacks, which in each case comprise at least two packages (3) per layer (6), and are then removed layer by layer or as a part stack with the aid of the carrier frame or transfer frame (15) and in order to form package stacks (5) are deposited on a transport carrier (2) or on part stacks already formed there,
wherein the taking of the packages (3) merged to form layers (6) or part stacks is effected with at least one inner and at least two outer carrier arms (13, 14) of the carrier frame or transfer frame (15), of which the inner carrier arm (13) is guided between the at least two packages (3) of the respective layer (6) or of the lowermost layer (6) of the part stack in such a way that it forms a lateral support as well as simultaneously also forming a standing surface for the packages (3) arranged on both sides, and of which the outer carrier arm (14) are positioned at the layer (6) or the lowermost layer (6) of the part stack in such a way that they form in each case a lateral support, as well as simultaneously also forming a standing surface for the packages (3) on their outer sides, facing away from the at least one inner carrier arm (13), **characterised in that** the outer carrier arms (14), at least in part sections, exhibit an angular or L-shaped cross section.

3. Method according to claim 1 or 2, **characterised in that** the packages (3) are centred and held at the carrier arms (13, 14) by the adjustment of the outer carrier arms (14) in the direction onto the inner carrier arm (13), between these carrier arms (13, 14), preferably free or essentially free of any transverse force.

4. Method according to any one of the preceding claims, **characterised in that** the at least one inner carrier arm (13) exhibits at least in part sections a cross-section which corresponds to an inverted or essentially inverter T.

5. Method according to any one of the preceding claims, **characterised in that** the outer carrier arms (14) exhibits at least in part sections an angular or L-shaped cross-section.

6. Method according to any one of the preceding claims, **characterised in that** the transport carrier is a transport carrier (2) provided with rollers.

7. Method according to any one of the preceding claims, **characterised in that** means (12) are provided at the pallet clearing device/pallet loader (7) for the precise positioning of the transport carriers (2) and/or of the package stacks (4) arranged on the transport carriers (2).

8. Method according to any one of the preceding claims, **characterised in that**, during unstacking, in each case a package stack arrangement (5), consisting of at least four package stacks (4) arranged in each case on a transport carrier (2), are merged in such a way that each layer (6) of the package stack arrangement (5) comprises at least two rows (6.1, 6.2) with in each case at least two packages (3) per row.

9. Method according to any one of the preceding claims, **characterised in that**, during unstacking, the packages (3) removed from the package stack arrangement (5) are deposited at the further position (7.2) on a transport table (7.2) formed there, and from there are transferred to the at least one transporter (8, 9).

10. Method according to any one of the preceding claims, **characterised in that**, during stacking, the layers (6) or the part stacks are merged in such a way that each layer (6) comprises at least two rows (6.1, 6.2) with in each case at least two packages (3) per row, and that, for the stacking, the at least one inner arm (13) supports the packages (3) between the rows (6.1, 6.2), and the outer carrier arms (14) support the packages (3) on the outer sides of each row (6.1, 6.2), facing away from the inner carrier arm (13).

11. Method according to any one of the preceding claims, **characterised in that** the packages (3) consist in each case of at least one tray (3.1), for example of cardboard or board, as well as of a plurality of containers, for example bottles (3.2), arranged on the respective tray (3.1).

## Revendications

1. Procédé de désempilement de fûts (3) disposés en piles de fût (4) respectivement sur un support de transport (2) en utilisant un dépalettiseur (7) avec un cadre de support ou de transfert (15) mobile de manière commandée dans le sens horizontal et/ou vertical,
dans lequel les fûts (3) forment sur une première position (7.1) du dépalettiseur (7) un agencement d'empilements de fûts (5) qui présente dans plusieurs couches (6) disposées dans le sens vertical les unes au-dessus des autres respectivement au moins deux fûts (3) et duquel sont retirés les fûts (3) par couche ou en piles partielles ou entières à l'aide du cadre de support ou de transfert (15) et sont déposés sur une autre position (7.2) du dépalettiseur (7) pour le transport avec au moins un transporteur (8, 9), dans lequel au moins deux piles de fûts (4) disposées sur respectivement un support de transport (2) sont réunies en un agencement d'empilements de fûts (5),
et
dans lequel la réception des fûts (3) sur la première position (7.1) est effectuée avec au moins un bras de support intérieur et au moins deux bras de support extérieurs (13, 14) du cadre de support ou de transfert (15),
dans lequel les bras de support extérieurs (14) présentent au moins dans des sections partielles une section transversale angulaire ou en L,
**caractérisé en ce que** le bras de support inférieur (13) est introduit entre les au moins deux fûts (3) de la couche (6) la plus basse à enlever de telle manière
qu'il forme un appui latéral ainsi qu'en même temps aussi un appui pour les fûts (3) disposés de part et d'autre, et
que les bras de support extérieurs (14) sont positionnés sur la couche (6) la plus basse à enlever de telle manière qu'ils forment respectivement un appui latéral ainsi qu'en même temps aussi un appui pour les fûts (3) sur leurs côtés extérieurs éloignés d'au moins un bras de support intérieur (13).

2. Procédé d'empilement de fûts (3) sur des supports de transport (2) en utilisant un palettiseur (7) avec un cadre de support ou de transfert (15) mobile de manière commandée dans le sens horizontal et/ou vertical, dans lequel les fûts (3) sont réunis pour la formation de couches (6) ou piles partielles qui présentent respectivement au moins deux fûts (3) par couche (6) et reçus ensuite par couches ou en piles partielles à l'aide du cadre de support ou de transfert (15) et pour la formation de piles de fûts (5) sont déposés sur un support de transport (2) ou piles partielles qui y sont déjà formées,
dans lequel la réception des fûts (3) réunis en couches (6) piles partielles est effectuée avec au moins un bras de support intérieur et au moins deux bras de support extérieurs (13, 14) du cadre de support ou de transfert (15), dont le bras de support (13) intérieur est introduit entre les au moins deux fûts (3) de la couche respective (6) ou la couche la plus basse (6) de la pile partielle de telle manière qu'il forme un appui latéral ainsi qu'en même temps aussi un appui pour les fûts (3) disposés de part et d'autre, et dont les bras de support extérieurs (14) sont positionnés sur la couche (6) ou la couche la plus basse (6) de la pile partielle de telle manière qu'ils forment respectivement un appui latéral ainsi qu'en même temps aussi un appui pour les fûts (3) sur leurs côtés extérieurs éloignés de l'au moins un bras de support intérieur (13),
**caractérisé en ce que** les bras de support extérieurs (14) présentent au moins en sections partielles une section transversale angulaire ou en forme de L.

3. Procédé selon la revendication 1 ou 2, **caractérisé en ce que** les fûts (3) sont centrés et maintenus sur les bras de support (13, 14) par avance des bras de support extérieurs (14) en direction du bras de support intérieur (13) entre ces bras de support (13, 14), sont maintenus de préférence sans force transversale ou sensiblement sans force transversale.

4. Procédé selon l'une quelconque des revendications précédentes,
**caractérisé en ce que** l'au moins un bras de support intérieur (13) présente au moins en sections partielles une section transversale qui correspond à un T inversé ou un T sensiblement inversé.

5. Procédé selon l'une quelconque des revendications précédentes,
**caractérisé en ce que** les bras de support extérieurs (14) présentent au moins en sections partielles une section transversale angulaire ou en forme de L.

6. Procédé selon l'une quelconque des revendications précédentes,
**caractérisé en ce que** les supports de transport sont des supports de transport (2) pourvus de rouleaux.

7. Procédé selon l'une quelconque des revendications précédentes,
**caractérisé en ce que** des moyens (12) pour le positionnement précis en position des supports de transport (2) et/ou des piles de fût (4) disposés sur les supports de transport (2) sont prévus sur le dépalettiseur/palettiseur (7).

8. Procédé selon l'une quelconque des revendications précédentes,
**caractérisé en ce que** lors du désempilement respectivement un agencement d'empilements de fûts (5) se composant d'au moins quatre piles de fûts (4) disposées sur respectivement un support de transport (2) est assemblé de sorte que chaque position (6) de l'agencement d'empilements de fûts (5) présente au moins deux rangées (6.1, 6.2) avec respectivement au moins deux fûts (3) par rangée.

9. Procédé selon l'une quelconque des revendications précédentes,
**caractérisé en ce que** lors du désempilement les fûts (3) retirés de l'agencement d'empilements de fûts (5) sont déposés sur l'autre position (7.2) sur une table de transport (7.2) qui y est formée par couche ou en piles partielles ou entières et de là sont transmis à l'au moins un transporteur (8, 9).

10. Procédé selon l'une quelconque des revendications précédentes,
**caractérisé en ce que** lors de l'empilement les couches (6) ou les piles partielles sont assemblées de sorte que chaque couche (6) présente au moins deux rangées (6.1, 6.2) avec respectivement au moins deux fûts (3) par rangée, et **en ce que** pour l'empilement l'au moins un bras de support intérieur (13) appuie les fûts (3) entre les rangées (6.1, 6.2) et les bras de support extérieurs (14) appuient les fûts (3) sur les côtés extérieurs éloignés du bras de support intérieur (13) de chaque rangée (6.1, 6.2).

11. Procédé selon l'une quelconque des revendications précédentes,
**caractérisé en ce que** les fûts (3) se composent respectivement d'au moins un plateau (3.1), par exemple en carton ou papier, ainsi que de plusieurs contenants, par exemple bouteilles (3.2), disposés sur le plateau respectif (3.1).
